(19) Europäisches Patentamt
European Patent Office
Office européen des brevets

(11) EP 4 769 610 A1

(12) EUROPEAN PATENT APPLICATION

(43) Date of publication:
**01.07.2026 Bulletin 2026/27**

(21) Application number: **25227134.1**

(22) Date of filing: **24.12.2025**

(51) International Patent Classification (IPC):
***H01M 10/052*** (2010.01) ***H01M 50/403*** (2021.01)
***H01M 50/429*** (2021.01) ***H01M 50/434*** (2021.01)
***H01M 50/443*** (2021.01) ***H01M 50/446*** (2021.01)
***H01M 50/451*** (2021.01)

(52) Cooperative Patent Classification (CPC):
**H01M 50/434; H01M 10/052; H01M 50/403; H01M 50/4295; H01M 50/443; H01M 50/446; H01M 50/451**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.12.2024 KR 20240195896**

(71) Applicant: **SAMSUNG SDI CO., LTD.**
**Yongin-si, Gyeonggi-do 17084 (KR)**

(72) Inventors:
- **JEONG, Bich Nam**
**16678 Gyeonggi-do (KR)**
- **LEE, Woo Sung**
**16678 Gyeonggi-do (KR)**
- **PARK, Sam Jin**
**16678 Gyeonggi-do (KR)**
- **KIM, Yang Seob**
**16678 Gyeonggi-do (KR)**

(74) Representative: **Michalski Hüttermann & Partner mbB**
**Kaistraße 16A**
**40221 Düsseldorf (DE)**

# (54) SEPARATOR FOR RECHARGEABLE LITHIUM BATTERY AND RECHARGEABLE LITHIUM BATTERY INCLUDING THE SAME

(57) Provided are a separator for a rechargeable lithium battery, and a lithium secondary battery including the separator. The separator includes a porous substrate, and a coating layer located on at least one surface of the porous substrate. The coating layer includes a composition including a binder, a crosslinking agent, and a filler mixture. The filler mixture includes a filler having an amine group, and a filler having a carboxyl group or carboxylate.

FIG 1.

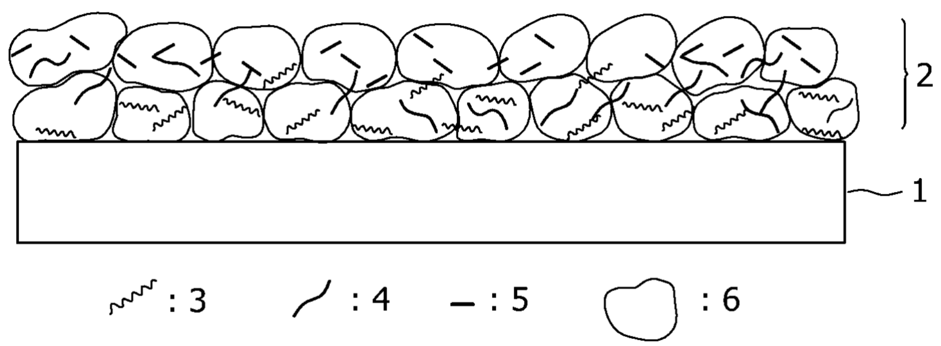


EP 4 769 610 A1

**Description**

BACKGROUND

**1. Field of the Disclosure**

The present disclosure relates to a separator for a rechargeable lithium battery, and a rechargeable lithium battery including the separator.

**2. Discussion of Related Art**

With increasing presence of electronic devices such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electric energy by oxidation and reduction reactions when the lithium ions are intercalated into and deintercalated from the positive electrode and the negative electrode.

The rechargeable lithium battery may include a separator between the positive electrode and the negative electrode. The separator is impregnated in an electrolyte solution. It may be desirable for the separator to maintain its original shape without undergoing thermal shrinkage in the electrolyte to ensure the safety of the battery.

SUMMARY

The present disclosure includes a separator for a rechargeable lithium battery having a low dry heat shrinkage rate and a low heat shrinkage rate in an electrolyte, thereby increasing the safety and lifetime of a battery.

The present disclosure also includes a rechargeable lithium battery, which includes the separator for a rechargeable lithium battery.

One example embodiment includes a separator for a rechargeable lithium battery.

The separator for a rechargeable lithium battery includes a porous substrate, and a coating layer located on at least one surface of the porous substrate. The coating layer is formed of or include a composition including a binder, a crosslinking agent, and a filler mixture. The filler mixture includes a filler having an amine group, and a filler having a carboxyl group or carboxylate.

Another example embodiment includes a rechargeable lithium battery, which includes the separator for a rechargeable lithium battery, a positive electrode, and a negative electrode.

The separator for a lithium secondary battery according to one example embodiment can exhibit a significantly low dry heat shrinkage rate and low heat shrinkage rate in an electrolyte, thereby increasing the safety and lifetime of a battery.

BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:

FIG. 1 is a cross-sectional view illustrating a separator for a rechargeable lithium battery according to one example embodiment; and
FIG. 2 to FIG. 5 are cross-sectional views schematically illustrating a rechargeable lithium battery according to one example embodiment.

DETAILED DESCRIPTION

Hereinafter, example embodiments of the present disclosure are described in detail. However, the embodiments are provided as examples, the present disclosure is not limited thereto, and the present disclosure is only defined by the scope of the claims to be described below.

Unless otherwise specified herein, when a part such as a layer, film, region, plate, and the like, is described as being "on" another part, it includes not only the case where the part is "directly on" the other part, but also the case where there is at least another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle diameter D100" refers to the average particle diameter, which means the diameter of particles with a cumulative volume of 100% by volume in the particle size distribution. The particle size distribution may be measured by methods known to those skilled in the art. For example, the particle size distribution may be measured using, e.g., a particle size analyzer, a transmission electron micrograph, or a scanning electron micrograph. In another method, an D100 value may be obtained by measuring the particle diameter using a measuring device using dynamic light scattering, performing data analysis to count the number of particles for each particle size range, and then calculating the particle diameter therefrom. Alternatively, D100 may be measured using, e.g., a laser diffraction method. For example, when measuring by laser diffraction, after the particles to be measured are dispersed in a dispersion medium, the particles may be introduced into a commercially available laser diffraction particle diameter measuring device (e.g., Microtrac MT 3000) and irradiated with ultrasonic waves of about 28 kHz at an output of 60 W, and the D100 based on 100% of the particle diameter distribution in the measurement device may be calculated.

In this specification, 'particle diameter D50' refers to the particle diameter of a particle having a cumulative volume of 50% by volume in a particle size distribution. The particle size distribution can be obtained by referring to the method described in the above 'particle diameter D100'.

In this specification, "(meth)acrylic" means acrylic and/or methacrylic.

Unless otherwise defined herein, "substitution" means that hydrogen in a compound is replaced by a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br or I), a hydroxyl group (-OH), a nitro group ($-NO_2$), a cyano group (-CN), an amino group (-NRR') (wherein, R and R' are each independently hydrogen or a C1 to C6 alkyl group), a sulfobetaine group ($-RR'N^+(CH_2)_nSO_3^-$, n is a natural number ranging from 1 to 10), a carboxybetaine group ($-RR'N^+(CH_2)_nCOO^-$, n is a natural number ranging from 1 to 10) (wherein, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$, a carbamoyl group ($-C(O)NH_2$), a thiol group (-SH), an acyl group (-C(=O)R, where R is hydrogen, a C1 to C6 alkyl group, a C1 to C6 alkoxy group, or a C6 to C12 aryl group), a carboxyl group (-COOH) or a salt thereof (-C(=O)OM, where M is an organic or inorganic cation), a sulfonic acid group ($-SO_3H$) or a salt thereof ($-SO_3M$, where M is an organic or inorganic cation), a phosphate group ($-PO_3H_2$) or a salt thereof ($-PO_3MH$ or $-PO_3M_2$, where M is an organic or inorganic cation), and combinations thereof.

Hereinafter, a C1 to C3 alkyl group means a methyl group, an ethyl group, or a propyl group. A C1 to C10 alkylene group may be or include, for example, a C1 to C6 alkylene group, a C1 to C5 alkylene group, or a C1 to C3 alkylene group, such as a methylene group, an ethylene group, or a propylene group. A C3 to C20 cycloalkylene group may be or include, for example, a C3 to C10 cycloalkylene group or a C5 to C10 cycloalkylene group, such as a cyclohexylene group. A C6 to C20 arylene group may be or include, for example, a C6 to C10 arylene group, such as a phenylene group. A C3 to C20 heterocyclic group may be or include, for example, a C3 to C 10 heterocyclic group, such as a pyridine group.

Hereinafter, "hetero" means including one or more heteroatoms such as or including at least one of N, O, S, Si, and P.

In chemical formulas, the * symbol indicates a moiety that is connected to the same or different atoms, groups, or structural units. Unless otherwise specifically stated in the chemical formulas described herein, it may be assumed that hydrogen is bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

When describing a numerical range in this specification, 'X to Y' means 'X or more and Y or less ($X \leq$ and $\leq Y$).'

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

According to one example embodiment, a separator for a secondary battery of the present disclosure may exhibit a significantly low dry heat shrinkage rate and low heat shrinkage rate in an electrolyte, thereby increasing the safety and lifetime of a battery.

According to one example embodiment, the dry heat shrinkage rate of the separator for a lithium secondary battery may be about 5% or less in each of the machine direction and the transverse direction, and the heat shrinkage rate in an electrolyte may be about 10% or less, for example, about 5% or less in each of the machine direction and the transverse direction.

The separator includes a porous substrate, and a coating layer located on at least one surface of the porous

substrate. The coating layer is formed of or include a composition for a coating layer, which includes a binder, a crosslinking agent, and a filler mixture. The filler mixture includes a filler having an amine group, and a filler having a carboxyl group or carboxylate.

Here, the carboxyl group may refer to -COOH(a carboxylic acid),, and the carboxylate may refer to $-COO^{-}M^{+}$ (M is an alkali metal).

The coating layer may include a crosslinked product of the composition of a coating layer.

The coating layer may include a crosslinked product of the filler having an amine group and the filler having a carboxyl group or carboxylate. The filler having an amine group and the filler having a carboxyl group or carboxylate may be crosslinked in a process of forming the coating layer from the composition for a coating layer to contribute to reducing the heat shrinkage rate. By crosslinking the filler having an amine group and a filler having a carboxyl group or carboxylate, compared to when a binder having an amine group and a binder with a carboxyl group are crosslinked, the separator may significantly reduce the heat shrinkage rate.

According to one example embodiment, the coating layer may include a crosslinked product of the binder and the crosslinking agent. The binder and the crosslinking agent may be crosslinked in the process of forming the coating layer from the composition for a coating layer, thereby further reducing the heat shrinkage rate.

According to one example embodiment, the coating layer may include a crosslinked product of the binder and the filler having an amine group. The binder and the filler having an amine group may be crosslinked in the process of forming the coating layer from the composition for a coating layer, thereby further reducing the heat shrinkage rate.

According to one example embodiment, the coating layer may include a crosslinked product of the binder, the filler having a carboxyl group or carboxylate, and the filler having an amine group. The binder, the filler having a carboxyl group or carboxylate, and the filler having an amine group may be crosslinked in the process of forming the coating layer from the composition for a coating layer, thereby further reducing the heat shrinkage rate.

Hereinafter, the configuration of the separator is described in detail.

## Coating layer

The coating layer may be or include a heat-resistant coating layer.

## Binder

The binder may include a first binder alone, or a mixture of the first binder and a second binder. The mixture of the first binder and the second binder may be included at about 95 wt% or more, for example, in a range of ≥ 95 wt% to ≤ 100 wt%, or 100 wt% of the binder.

The second binder may be an adhesive binder. The second binder includes one or more of polyvinyl alcohol, polyacrylic acid, and poly(vinyl alcohol-co-acrylic acid). One or more of polyvinyl alcohol, polyacrylic acid, and poly(vinyl alcohol-co-acrylic acid) may increase the adhesion strength between the first binder and a filler that is not surface-modified.

According to one example embodiment, the second binder may have a glass transition temperature in a range of ≥ -20 °C to ≤ 30 °C, for example, -20, -19, -18, -17, -16, -15, -14, -13, -12, -11, -10, -9, -8, -7, -6, -5, -4, -3, -2, -1, 0, 1, 2, 3, 4, 5, 6, 7, 8, 9, 10, 11, 12, 13, 14, 15, 16, 17, 18, 19, 20 °C, -10 °C to 20 °C. In the above range, the second binder is advantageous in providing the low dry heat shrinkage rate and the low heat shrinkage rate in an electrolyte. The glass transition temperature may be measured using, e.g., a differential scanning calorimeter (DSC).

According to one example embodiment, the second binder may have a weight average molecular weight in a range of ≥ 100,000 g/mol to ≤ 800,000 g/mol, for example, 100,000, 200,000, 300,000, 400,000, 500,000, 600,000, 700,000, 800,000 g/mol, 200,000 g/mol to 500,000 g/mol. In the above range, the second binder is advantageous in providing the low dry heat shrinkage rate and the low heat shrinkage rate in an electrolyte. The weight average molecular weight may be calculated through, e.g., polystyrene conversion in gel permeation chromatography.

The second binder may be included in a range of ≥ 10 parts by weight to ≤ 25 parts by weight for example 10, 11, 12, 13, 14, 15, 16, 17, 18, 19, 20, 21, 22, 23, 24, 25 parts by weight based on 100 parts by weight of the total of the first binder and the second binder. In the above range, the second binder may be advantageous in providing the low dry heat shrinkage rate and the low heat shrinkage rate in an electrolyte.

As the first binder is a non-adhesive binder, the first binder may contribute to lowering the heat shrinkage rate of the separator due to having high heat resistance. The first binder may be or include an aqueous heat-resistant binder.

The first binder may be included in a range of ≥ 75 parts by weight to ≤ 90 parts by weight for example 75, 76, 77, 78, 79, 80, 81, 82, 83, 84, 85, 86, 87, 88, 89, 90 parts by weight, based on 100 parts by weight of the total of the first binder and the second binder. In the above range, the first binder is advantageous in increasing substrate adhesion and lowering the heat shrinkage rate.

The first binder may be or include a (meth)acrylic binder.

The (meth)acrylic binder may include a first structural unit derived from (meth)acrylamide; and a second structural unit which includes at least one of a structural unit derived from (meth)acrylic acid, (meth)acrylate, or a salt thereof, and a structural unit derived from (meth)acrylamidosulfonic acid or a salt thereof.

The (meth)acrylic binder may be or include a bipolymer which has the first structural unit, and a structural unit derived from (meth)acrylamidosulfonic acid or a salt thereof. The (meth)acrylic binder may be or include a terpolymer which has the first structural unit, a structural unit derived from (meth)acrylic acid or (meth)acrylate, or a salt thereof, and a structural unit derived from (meth)acrylamidosulfonic acid or a salt thereof.

The first structural unit may be included in a range of ≥ 55 mol% to ≤ 95 mol% based on 100 mol% of the (meth) acrylic binder, and the second structural unit may be included in a range of ≥ 5 mol% to ≤ 45 mol% based on 100 mol% of the (meth)acrylic binder. Within the above range, it may be possible to prepare the (meth)acrylic binder and to provide the effects of the above-described coating layer.

In one example embodiment, the first structural unit may be included in a range of ≥ 75 mol% to ≤ 95 mol%, for example, ≥ 80 mol% to ≤ 95 mol%, or ≥ 80 mol% to ≤ 90 mol%, based on 100 mol% of the (meth)acrylic binder.

In the second structural unit, the structural unit derived from (meth)acrylic acid, (meth)acrylate, or a salt thereof may be included in a range of ≥ 0 mol% to ≤ 40 mol%, for example, more than 0 mol% to ≤ 40 mol%, ≥ 1 mol% to ≤ 40 mol%, or ≥ 1 mol% to ≤ 10 mol% based on 100 mol% of the (meth)acrylic binder, and the structural unit derived from (meth)acryl amidosulfonic acid, or a salt thereof may be included in a range of ≥ 0 mol% to ≤ 10 mol%, for example, more than 0 mol% to ≤ 10 mol%, or ≥ 1 mol% to ≤ 10 mol% based on 100 mol% of the (meth)acrylic binder.

The structural unit derived from (meth)acrylamide may be included in a range of ≥ 80 mol% to ≤ 90 mol% based on 100% of the (meth)acrylic binder, the structural unit derived from (meth)acrylic acid, (meth)acrylate, or a salt thereof may be included in a range of ≥ 0 mol% to ≤ 40 mol%, for example, ≥ 1 mol% to ≤ 10 mol%, based on 100 mol% of the (meth) acrylic binder, and the structural unit derived from (meth)acryl amidosulfonic acid, or a salt thereof may be included in a range of ≥ 0 mol% to ≤ 10 mol%, for example, ≥ 1 mol% to ≤ 10 mol% based on 100 mol% of the (meth)acrylic binder. When the content of each structural unit is within the above range, the heat resistance and adhesive strength of the separator may be further improved.

The first structural unit derived from (meth)acrylamide may be represented by Chemical Formula 1 below.

Chemical Formula 1:

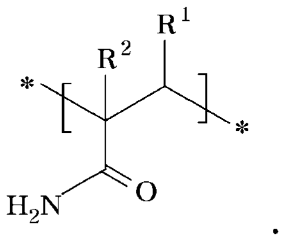

In Chemical Formula 1,

$R^1$ and $R^2$ each independently is or includes hydrogen or a methyl group.

The structural unit derived from (meth)acrylic acid, (meth)acrylate or a salt thereof may be represented by, for example, any one or more of Chemical Formula 2 below, Chemical Formula 3 below, Chemical Formula 4 below, and a combination thereof.

Chemical Formula 2:

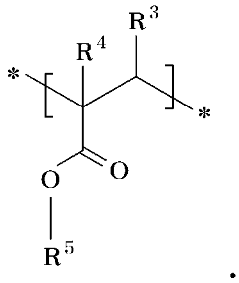

Chemical Formula 3:

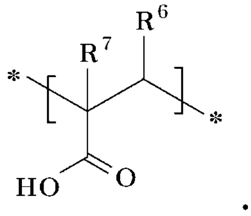

Chemical Formula 4:

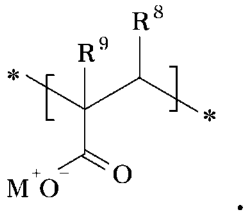

In Chemical Formulas 2, 3, and 4, $R^3$, $R^4$, $R^6$, $R^7$, $R^8$ and $R^9$ independently is or includes hydrogen or a methyl group, $R^5$ is or includes a substituted or unsubstituted C1 to C20 alkyl group, and M is or includes an alkali metal.

The alkali metal may be or include, for example, at least one of lithium, sodium, potassium, rubidium, or cesium.

The structural unit derived from (meth)acrylate may be derived from alkyl ester (meth)acrylate, perfluoroalkyl ester (meth)acrylate, or derived from (meth)acrylate having a functional group in a side chain, and for example, an alkyl ester (meth)acrylate. In addition, the carbon number of the alkyl or perfluoroalkyl group binding to a non-carbonyl oxygen atom of the alkyl ester (meth)acrylate or perfluoroalkyl ester (meth)acrylate may be, for example, in a range of 1 to 20, a range of 1 to 10, or for example, a range of 1 to 5.

Examples of the alkyl ester (meth)acrylate in which the carbon number of an alkyl or perfluoroalkyl group binding to a non-carbonyl oxygen atom is in a range of 1 to 5 may include acrylic acid alkyl esters such as at least one of methyl acrylate, ethyl acrylate, n-propyl acrylate, isopropyl acrylate, n-butyl acrylate, and t-butyl acrylate; 2-(perfluoroalkyl)ethyl acrylates such as 2-(perfluorobutyl)ethyl acrylate, and 2-(perfluoropentyl)ethyl acrylate; alkylester (meth)acrylates such as methyl (meth)acrylate, ethyl (meth)acrylate, n-propyl (meth)acrylate, isopropyl (meth)acrylate, n-butyl (meth)acrylate, and t-butyl (meth)acrylate; and 2-(perfluoroalkyl)ethyl (meth)acrylates such as 2-(perfluoroalkyl)ethyl (meth)acrylate, 2-(perfluorobutyl)ethyl (meth)acrylate, and 2-(perfluoropentyl)ethyl (meth)acrylate.

Other alkyl ester (meth)acrylates may include alkyl ester acrylates having 6 carbon atoms to 18 carbon atoms of the alkyl group binding to a non-carbonyl oxygen atom, such as at least one of n-hexyl acrylate, 2-ethylhexyl acrylate, nonyl acrylate, lauryl acrylate, stearyl acrylate, cyclohexyl acrylate, and isobonyl acrylate; alkyl ester (meth)acrylates having 6 to 18 carbon atoms of the alkyl group binding to a non-carbonyl oxygen atom, such as n-hexyl (meth)acrylate, 2-ethylhexyl (meth)acrylate, octyl (meth)acrylate, isodecyl (meth)acrylate, lauryl (meth)acrylate, tridecyl (meth)acrylate, stearyl (meth) acrylate, and cyclohexyl (meth)acrylate; 2-(perfluoroalkyl)ethyl acrylates having 6 to 18 carbon atoms of the perfluoroalkyl group binding to a non-carbonyl oxygen atom, such as 2-(perfluorohexyl)ethyl acrylate, 2-(perfluorooctyl)ethyl acrylate, 2-(perfluorononyl)ethyl acrylate, 2-(perfluorodecyl)ethyl acrylate, 2-(perfluorododecyl)ethyl acrylate, 2-(perfluorotetradecyl)ethyl acrylate, and 2-(perfluorohexadecyl)ethyl acrylate; and 2-(perfluoroalkyl)ethyl (meth)acrylates having 6 to 18 carbon atoms of the perfluoroalkyl group binding to a non-carbonyl oxygen atom, such as 2-(perfluorohexyl)ethyl (meth) acrylate, 2-(perfluorooctyl)ethyl (meth)acrylate, 2-(perfluorononyl)ethyl (meth)acrylate, 2-(perfluorodecyl)ethyl (meth) acrylate, 2-(perfluorododecyl)ethyl (meth)acrylate, 2-(perfluorotetradecyl)ethyl (meth)acrylate, and 2-(perfluorohexadecyl)ethyl (meth)acrylate.

The structural unit derived from (meth)acrylic acid, (meth)acrylate, or a salt thereof may include each or all of a structural unit represented by Chemical Formula 2, a structural unit represented by Chemical Formula 3, and a structural unit represented by Chemical Formula 4, and the structural unit represented by Chemical Formula 2; the structural unit represented by Chemical Formula 3, and the structural unit represented by Chemical Formula 4 may be included in a molar ratio in a range of about 10:1 to about 1:1, for example, 6:1 to 1:1, and for example, 3:1 to 1:1.

The structural unit derived from (meth)acrylamidosulfonic acid, or a salt thereof may be or include a structural unit derived from (meth)acrylamidosulfonic acid or (meth)acrylamidosulfonate, and the (meth)acrylamidosulfonate may be or include a conjugate base of (meth)acrylamidosulfonic acid, (meth)acrylamidosulfonate, or a derivative thereof. The structural unit derived from (meth)acrylamidosulfonic acid or (meth)acrylamidosulfonate may be represented by, for

example, any one or more of Chemical Formula 5 below, Chemical Formula 6 below, Chemical Formula 7 below, and a combination thereof.

Chemical Formula 5:

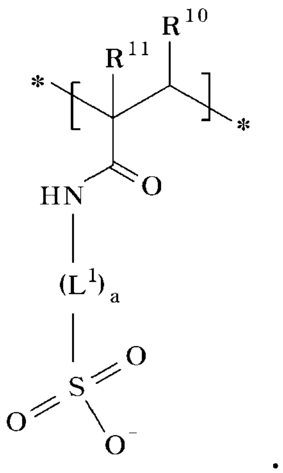

Chemical Formula 6:

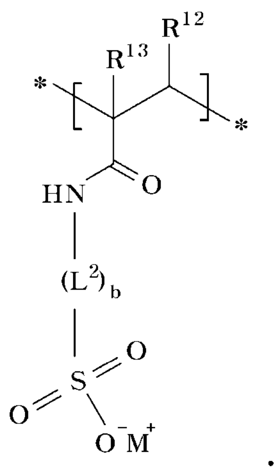

Chemical Formula 7:

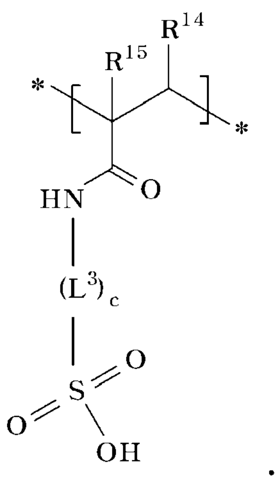

In Chemical Formulas 5 to 7, $R^{10}$, $R^{11}$, $R^{12}$, $R^{13}$, $R^{14}$, and $R^{15}$ each independently is or includes hydrogen or a methyl group,

$L^1$, $L^2$, and $L^3$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b and c are each independently an integer ranging from 0 to 2, M is or includes an alkali metal, and the alkali metal may be or include, for example, at least one of lithium, sodium, potassium, rubidium, or cesium.

In one example, in Chemical Formulas 5 to 7, $L^1$, $L^2$, and $L^3$ each independently is or includes a substituted or unsubstituted C1 to C10 alkylene group, and a, b, and c may each be equal to 1.
The structural unit of (meth)acrylamidosulfonic acid or a salt thereof may include at least one of a structural unit represented by Chemical Formula 5, a structural unit represented by Chemical Formula 6, or a structural unit represented by Chemical Formula 7, or two or more thereof. In one example, the structural unit of (meth)acrylamidosulfonic acid or a salt thereof may include the structural unit represented by Chemical Formula 6, and in another example, the structural unit of (meth)acrylamidosulfonic acid or a salt thereof may include the structural unit represented by Chemical Formula 6 and the structural unit represented by Chemical Formula 7.
When both the structural unit represented by Chemical Formula 6 and the structural unit represented by Chemical Formula 7 are included, the structural unit represented by Chemical Formula 6 and the structural unit represented by Chemical Formula 7 may be included in a molar ratio in a range of about 10:1 to about 1:2, for example, 5:1 to 1:1, and for example, 3:1 to 1:1.
The sulfonate group in the structural unit derived from (meth)acrylamidosulfonic acid or a salt thereof may be or include, for example, at least one of vinylsulfonic acid, allylsulfonic acid, styrenesulfonic acid, anetholesulfonic acid, acrylamidoalkanesulfonic acid, sulfoalkyl (meth)acrylate, or a salt thereof.
Here, the alkane may be or include a C1 to C20 alkane, a C1 to C10 alkane, or a C1 to C6 alkane, and the alkene may be or include a C2 to C20 alkene, a C2 to C10 alkene, or a C2 to C6 alkene. The salt means a salt composed of or including the above-mentioned sulfonic acid and a desired ion. The above ion may be, for example, an alkali metal ion, and in this case, the salt may be or include an alkali metal salt of sulfonic acid.
The acrylamidoalkanesulfonic acid may be or include, for example, 2-acrylamido-2-methylpropanesulfonic acid, and the sulfoalkyl (meth)acrylate may be or include, for example, 2-sulfoethyl (meth)acrylate or 3-sulfopropyl (meth) acrylate.
In one example, the (meth)acrylic binder may be represented by Chemical Formula 8 below.

Chemical Formula 8:

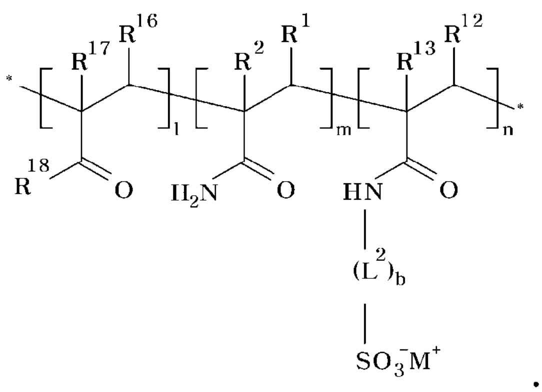

In Chemical Formula 8, $R^1$, $R^2$, $R^{12}$, $R^{13}$, $R^{16}$, and $R^{17}$ each independently is or includes hydrogen or a methyl group,

$R^{18}$ is or includes OR or $O^-M^+$, R is or includes hydrogen or a C1 to C6 alkyl group, M is or includes an alkali metal, $L^2$ is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, b is an integer ranging from 0 to 2, M is or includes an alkali metal, and each of l, m and n means the molar ratio of each unit.

The alkali metal may be or include, for example, at least one of lithium, sodium, potassium, rubidium, or cesium.

In one example, in Chemical Formula 8, l+m+n may be equal to 1. In addition, in one example, Chemical Formula 8 may satisfy $0.05 \le (l+n) \le 0.45$ and $0.55 \le m \le 0.95$, for example, $0 \le l \le 0.4$ and $0 \le n \le 0.1$, for example, $0.8 \le m \le 0.9$, $0 \le l \le 0.1$, and $0 \le n \le 0.1$, and for example, $0.8 \le m \le 0.9$, $0.01 \le l \le 0.1$, and $0.01 \le n \le 0.1$.

In one example, in Chemical Formula 8, $L^2$ may be or include a substituted or unsubstituted C1 to C10 alkylene group, and b may be equal to 1.

In the (meth)acrylic binder, the structural unit substituted with an alkali metal ($M^+$) may be present in a range of ≥ 50 mol% to ≤ 100 mol%, for example, ≥ 60 mol% to ≤ 90 mol%, or ≥ 70 mol% to ≤ 90 mol%, based on 100 mol% of the total weight of the structural unit of (meth)acrylamidosulfonic acid or a salt thereof. When the structural unit satisfies the above range, a (meth)acrylic binder and a separator including the (meth)acrylic binder may exhibit desired or improved adhesive strength, heat resistance, and oxidation resistance.

The (meth)acrylic binder may further include other units, in addition to the above-described units. For example, the (meth)acrylic binder may further include at least one of a unit derived from alkyl (meth)acrylate, a unit derived from a diene, a unit derived from a styrene, a unit containing an ester group, a unit containing a carbonate group, or a combination thereof.

The (meth)acrylic binder may be present in various forms such as, e.g., an alternating polymer in which the structural units are alternately distributed, a random polymer in which the structural units are randomly distributed, and a graft polymer in which some structural units are grafted.

The weight average molecular weight of the (meth)acrylic binder may be in a range of ≥ 350,000 to ≤ 970,000, for example, ≥ 450,000 to ≤ 970,000, or ≥ 450,000 to ≤ 700,000. When the weight average molecular weight (Mw) of the (meth) acrylic binder satisfies the above range, the (meth)acrylic binder and a separator including the (meth)acrylic binder may exhibit desired or improved adhesive strength, heat resistance, and air permeability. The weight average molecular weight may be a polystyrene-converted average molecular weight, which is measured using, e.g., gel permeation chromatography.

The (meth)acrylic binder may be prepared by various known methods such as, e.g., emulsion polymerization, suspension polymerization, bulk polymerization, and solution polymerization.

The (meth)acrylic binder may be prepared by a solution polymerization method.

**Crosslinking agent**

The crosslinking agent includes one or more of an aziridine-based crosslinking agent and a carbodiimide-based crosslinking agent. Preferably, the aziridine-based crosslinking agent may crosslink the (meth)acrylic binder, and may help the separator to reach the ranges of the dry heat shrinkage rate and the heat shrinkage rate in an electrolyte.

The aziridine-based crosslinking agent may be or include a bifunctional or higher aziridine-based crosslinking agent. Here, the "bifunctional or higher" means that two or more aziridine groups are present in the molecule. According to one example embodiment, the aziridine-based crosslinking agent may be or include a bifunctional or trifunctional aziridine-based crosslinking agent.

For example, the aziridine-based crosslinking agent may include one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridinepropionate), trimethylolpropane tris(beta-N-aziridinyl)propionate, pentaerythritol tris(3-(1-aziridinyl)propionate).

The crosslinking agent, for example, the aziridine-based crosslinking agent, has to be included at a desired content based on the binder, for example, the (meth)acrylic binder. According to one example embodiment, the aziridine-based crosslinking agent may be included in a range of about 5 parts by weight to about 50 parts by weight, for example, for example, 5,6,7,8,9,10,11,12,13,14,15,16,17,18,19,20,21,22,23,24,25,26,27,28,29,30,31,32,33,34,35,36,37,38,39,40,41,42,43,44,45,46,47,48,49,50 parts by weight,10 parts by weight to 30 parts by weight, or 10 parts by weight to 20 parts by weight based on the content 100 parts by weight of the first binder, that is, the (meth)acrylic binder. Within the above range, an effect of improving the heat shrinkage rate in an electrolyte may be exhibited.

**Filler having amine group**

The filler having an amine group has an amine group on the outermost surface thereof. The amine group may be crosslinked with a carboxyl group of a filler having a carboxyl group or carboxylate, which is described below, thereby reducing the heat shrinkage rate.

The filler having an amine group may include a filler which is surface-modified to have an amine group.

The surface modification may include modifying the surface of the filler to have an amine group. Here, the "amine group" may refer to $*N(R^1)(R^2)$ (wherein $R^1$ and Rare hydrogen or a substituted or unsubstituted C1 to C10 alkyl group),

and for example, $-NH_2$. Such surface modification may expand the particle diameter range of the filler that may provide the dry heat shrinkage rate and the heat shrinkage rate in an electrolyte as compared to the case in which the filler that is not surface modified.

According to one example embodiment, the surface modification may include surface-modifying the filler that is not surface-modified with an amino silane compound. The amino silane compound may include a silane compound having one or more, for example, 1 nitrogen atom to 6 nitrogen atoms.

In one example embodiment, the amino silane compound may include one or more compounds represented by Chemical Formula 9 below, Chemical Formula 10 below, and Chemical Formula 11 below, but the present disclosure is not limited thereto:

Chemical Formula 9:

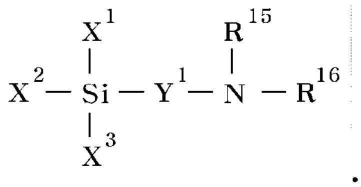

Chemical Formula 10:

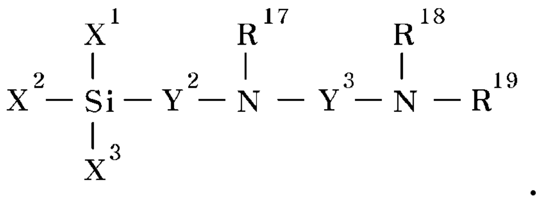

Chemical Formula 11:

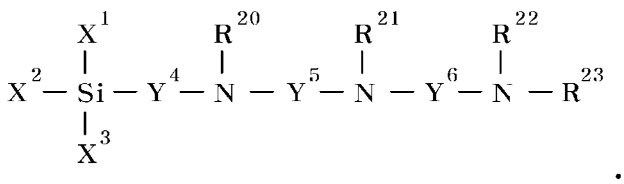

In Chemical Formulas 9 to 11,

$X^1$, $X^2$, and $X^3$ each independently is or includes hydrogen, a hydroxyl group, a substituted or unsubstituted C1 to C20 alkyl group, a substituted or unsubstituted C6 to C20 aryl group, a substituted or unsubstituted C3 to C20 cycloalkyl group, a substituted or unsubstituted C7 to C20 arylalkyl group, a substituted or unsubstituted C1 to C20 alkoxy group, or a substituted or unsubstituted C6 to C20 aryloxy group,

At least one of $X^1$, $X^2$, and $X^3$ is or includes a hydroxyl group, a substituted or unsubstituted C1 to C20 alkoxy group, or a substituted or unsubstituted C6 to C20 aryloxy group,

$Y^1$, $Y^2$, $Y^3$, $Y^4$, $Y^5$, and $Y^6$ each independently is or includes a divalent C1 to C20 aliphatic hydrocarbon group, a divalent C5 to C20 alicyclic hydrocarbon group, or a divalent C6 to C20 aromatic hydrocarbon group,

$R^{15}$, $R^{16}$, $R^{17}$, $R^{18}$, $R^{19}$, $R^{20}$, $R^{21}$, $R^{22}$, and $R^{23}$ each independently is or includes hydrogen, a hydroxyl group, a substituted or unsubstituted C1 to C20 monovalent aliphatic hydrocarbon group, a substituted or unsubstituted C3 to C20 monovalent alicyclic hydrocarbon group, or a substituted or unsubstituted C6 to C20 monovalent aromatic hydrocarbon group.

For example, the amino silane compound may include at least one or more of 3-aminopropyl triethoxysilane, 3-aminopropyl trimethoxysilane, 3-aminopropylmethyl dimethoxysilane, 3-aminopropylmethyl diethoxysilane, aminoethylaminopropyl trimethoxysilane, aminoethylaminopropyl triethoxysilane, aminoethylaminopropylmethyl dimethoxysilane, aminoethylaminopropylmethyl diethoxysilane, aminoethylaminomethyl triethoxysilane, aminoethylaminomethylmethyl diethoxysilane, diethylenetriaminopropyltrimethoxysilane, diethylenetriaminopropyl triethoxysilane, diethylenetriaminopropylmethyl dimethoxysilane, diethylenetriaminopropylmethyl diethoxysilane, and diethylenetriaminomethylmethyl diethoxysilane, but the present disclosure is not limited thereto.

According to one example embodiment, the surface modification may be performed by a conventional method using an amino silane compound.

The filler having an amine group may be or include, for example, an inorganic filler, an organic filler, an organic/inorganic-composite filler or a combination thereof. The inorganic filler may be or include a ceramic material that can improve heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but the present disclosure is not limited thereto. The organic filler may include at least one of an acryl compound, an imide compound, an amide compound, or a combination thereof, but the present disclosure is not limited thereto. The organic filler may have a core-shell structure, but the present disclosure is not limited thereto. For example, the filler may be boehmite.

The filler having an amine group may be spherical, plate-like, cubic, or amorphous. For example, the filler may be a plate-like filler.

The filler having an amine group has to be included at a desired content with respect to the binder, for example, the total of the first binder and the second binder.

According to one example embodiment, the total of the first binder and the second binder, and the filler having an amine group may be included in a mass ratio in a range of about 1:10 to about 1:50, for example, 1:10, 1:11, 1:12, 1:13, 1:14, 1:15, 1:16, 1:17, 1:18, 1:19, 1:20, 1:21, 1:22, 1:23, 1:24, 1:25, 1:26, 1:27, 1:28, 1:29, 1:30, 1:31, 1:32, 1:33, 1:34, 1:35, 1:36, 1:37, 1:38, 1:39, 1:40, 1:41, 1:42, 1:43, 1:44, 1:45, 1:46, 1:47, 1:48, 1:49, 1:50, 1:10 to 1:30, or 1:20 to 1:30. Within the above range, a heat shrinkage rate -improving effect in an electrolyte may be exhibited.

The filler having an amine group may have a particle diameter (D100) of about 1.0 $\mu$m or less. Within the above range, it may be possible for the combination of the (meth)acrylic binder and the crosslinking agent to reach the dry heat shrinkage rate and the heat shrinkage rate in an electrolyte. For example, the filler having an amine group may have a particle diameter (D100) of about 0.1, 0.2, 0.3, 0.4, 0.5, 0.6, 0.7, 0.8, 0.9, 1.0 $\mu$m, about 0.5 $\mu$m or less, or in a range of $\geq$ 0.3 $\mu$m to $\leq$ 0.5 $\mu$m.

The filler having an amine group may have a particle diameter (D50) of about 0.4 $\mu$m or less, 0.3 $\mu$m or less, or in a range of $\geq$ 0.2 $\mu$m to $\leq$ 0.3 $\mu$m. Within the above range, an effect of improving heat shrinkage in an electrolyte may be exhibited.

The filler having an amine group may be included in a range of $\geq$ 50 wt% to $\leq$ 99 wt%, $\geq$ 70 wt% to $\leq$ 99 wt%, $\geq$ 75 wt% to $\leq$ 99 wt%, $\geq$ 80 wt% to $\leq$ 99 wt%, $\geq$ 85 wt% to $\leq$ 99 wt%, $\geq$ 90 wt% to $\leq$ 99 wt%, or $\geq$ 95 wt% to $\leq$ 99 wt% based on the total weight of the coating layer. When the filler is included within the above range, desired or improved heat resistance, durability, oxidation resistance, and stability may be exhibited.

### Filler having carboxyl group or carboxylate

A filler having a carboxyl group or carboxylate has a carboxyl group or carboxylate on the outermost surface. The filler having a carboxyl group or carboxylate may include a filler surface-modified to have a carboxyl group or carboxylate.

The surface modification may be performed by oxidizing a filler having a hydroxyl group in the molecule with an oxidizing agent. The oxidizing agent may include, for example, 2,2,6,6-tetramethylpiperidine-1-oxyl radical (TEMPO), but the present disclosure is not limited thereto.

The filler having a carboxyl group or carboxylate in the molecule thereof may include cellulose-based nanocrystals, and cellulose-based nanofibers. For example, the filler may be or include cellulose-based nanocrystals.

The cellulose-based nanocrystals or cellulose-based nanofibers having a carboxyl group or carboxylate may have a carboxyl group or carboxylate that is linked to the C6 site of the cellulose unit.

According to one example embodiment, the filler having a carboxyl group or carboxylate may have a maximum width in a range of $\geq$ 5 nm to $\leq$ 20 nm and a maximum length in a range of $\geq$ 100 nm to $\leq$ 250 nm. Within the above range, an effect of improving heat shrinkage in an electrolyte may be exhibited.

The filler having a carboxyl group or carboxylate has to be included at a desired content with respect to the filler having an amine group. According to one example embodiment, the filler having a carboxyl group or carboxylate may be included in a range of $\geq$ 2 parts by weight to $\leq$ 15 parts by weight, for example, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15 parts by weight, $\geq$ 2.5 parts by weight to $\leq$ 10 parts by weight with respect to 100 parts by weight of the filler having an amine group. Within the above range, an effect of improving heat shrinkage in an electrolyte may be exhibited.

The coating layer may be formed by coating at least one surface of a porous substrate to be described below with the composition for a coating layer and curing the composition.

Each coating layer may have a thickness in a range of $\geq$ 0.01 $\mu$m to $\leq$ 20 $\mu$m, and within the above range, each

coating layer may have a thickness of ≥ 0.1 μm to ≤ 10 μm, ≥ 0.1 μm to ≤ 5 μm, or ≥ 0.1 μm to ≤ 3 μm.

The ratio of the thickness of the coating layer to the thickness of the porous substrate may be in a range of ≥ 0.05 to ≤ 0.5, for example, ≥ 0.05 to ≤ 0.4, ≥ 0.05 to ≤ 0.3, or ≥ 0.1 to ≤ 0.2. Within the above range, the separator may exhibit desired or improved air permeability, heat resistance and adhesive strength. Here, the "thickness of the coating layer" refers to the thickness of one coating layer when the coating layer is formed on only one surface of the porous substrate, and refers to the thickness of two coating layers when the coating layer is formed on both surfaces of the porous substrate.

**Porous substrate**

A porous substrate has a large number of pores and may be or include a substate commonly used in electrochemical devices. The porous substrate may be or include, but is not limited to, a polymer film which is formed of or include any one polymer such as or including at least one of polyolefins such as polyethylene and polypropylene, polyesters such as polyethylene terephthalate, polyethylene naphthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, glass fiber, Teflon, and polytetrafluoroethylene, or a copolymer or mixture of two or more thereof.

The porous substrate may be or include, for example, a polyolefin-based substrate including a polyolefin, and the polyolefin-based substrate may have an desired or improved shut-down function, thereby contributing to improving the safety of the battery. The polyolefin-based substrate may be or include, for example, at least one of a polyethylene single layer film, a polypropylene single-layer film, a polyethylene/polypropylene two-layer film, a polypropylene/polyethylene/polypropylene three-layer film, and a polyethylene/polypropylene/polyethylene three-layer film. In addition, the polyolefin-based resin may include a non-olefin resin in addition to an olefin resin, or may include a copolymer of olefin and non-olefin monomers.

The porous substrate may have a thickness in a range of ≥ 1 μm to ≤ 40 μm, for example, ≥ 1 μm to ≤ 30 μm, ≥ 1 μm to ≤ 20 μm, or ≥ 5 μm to ≤ 15 μm.

A separator for a lithium secondary battery according to one example embodiment may exhibit desired or improved air permeability, and may have an air permeability value of, for example, less than about 200 sec/100cc, for example, 190 sec/100cc or less, or 180 sec/100cc or less. That is, the separator may have an air permeability value of less than about 40 sec/100cc·1 μm, for example, 30 sec/100cc·1 μm or less, or 25 sec/100cc·1 μm or less per unit thickness. Here, the air permeability refers to the time (sec) it takes for 100 cc of air to pass through the unit thickness of the separator. The air permeability per unit thickness may be obtained by measuring air permeability for the total thickness of the separator and then dividing the air permeability by the thickness. Air permeability was measured by measuring the time it takes for 100 cc of air to pass through each separator (units: sec) using a measuring device (EG01-55-1MR, Asahi Seiko).

FIG. 1 is a cross-sectional view illustrating a separator for a rechargeable lithium battery according to one example embodiment.

Referring to FIG. 1, the separator for a rechargeable lithium battery includes a porous substrate 1, and a coating layer 2 located on one surface of the porous substrate 1. The coating layer 2 may include a first binder 3, a second binder 4, a filler having a carboxyl group 5; and a filler having an amine group 6. Although not shown in FIG. 1, the first binder 3 is crosslinked by a crosslinking agent.

FIG. 1 shows a separator in which the coating layer 2 is located on only one surface of the porous substrate 1, but a separator in which the coating layer 2 is located on both surfaces of the porous substrate 1 may also be included in the scope of the present disclosure.

Rechargeable lithium battery

According to one example embodiment, the rechargeable lithium battery includes the separator for a rechargeable lithium battery, a positive electrode, and a negative electrode.

The separator for a rechargeable lithium battery refers to the description described above. The separator for a rechargeable lithium battery may be positioned between the positive electrode and the negative electrode.

Positive electrode

A positive electrode for a rechargeable lithium battery may include a current collector and a positive electrode active material layer on the current collector. The positive electrode active material layer may include a positive electrode active material, and may further include a binder and/or a conductive material. For example, the positive electrode may further include an additive that can constitute a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.
The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free lithium nickel-manganese-based oxide, or a combination thereof.
As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0<\alpha<2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_dO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).
In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.
The positive electrode active material may be or include, for example, a high nickel-based positive electrode active material having a nickel content greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.
An amount of the positive electrode active material may be in a range of ≥ 90 wt% to ≤ 99.5 wt% based on 100 wt% of the positive electrode active material layer. Amounts of the binder and the conductive material may be in a range of ≥ 0.5 wt% to ≤ 5 wt%, respectively, based on 100 wt% of the positive electrode active material layer.
The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.
The conductive material may be impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.
Al may be used as the current collector, but the current collector is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).
For example, the negative electrode active material layer may include a range of ≥ 90 wt% to ≤ 99 wt% of the negative electrode active material, a range of ≥ 0.5 wt% to ≤ 5 wt% of the binder, and a range of ≥ 0 wt% to ≤ 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be present between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

## Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIG. 2 to FIG. 5 are schematic views illustrating a rechargeable lithium battery according to an example embodiment. FIG. 2 shows a cylindrical battery, FIG. 3 shows a prismatic battery, and FIG. 4 and FIG. 5 show pouch-type batteries. Referring to FIG. 2 to FIG. 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 4 and FIG. 5, the rechargeable lithium battery 100 may include an electrode tab 70 illustrated in FIG. 5, or for example, a positive electrode tab 71 and a negative electrode tab 72 illustrated in FIG. 4, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely provided to illustrate the present disclosure, and the present disclosure is not limited to the following examples.

**Preparation Example 1**

In a 10L four-neck flask equipped with a stirrer, a thermometer, and a condenser, after adding distilled water (6,361g), acrylic acid (1.0 mol), acrylamide (8.5 mol), potassium persulfate (0.01 mol), 2-acrylamido-2-methylpropanesulfonic acid (0.5 mol), and a 5N lithium hydroxide aqueous solution (1.05 equivalents with respect to the total amount of the 2-acrylamido-2-methylpropanesulfonic acid), the operation of reducing the inner pressure to 10 mmHg using a diaphragm pump and returning the pressure to normal pressure with nitrogen was repeated three times.

The reaction was performed for 12 hours while controlling the temperature of the reaction solution to be stabilized in a range of 65 °C to 70 °C. After cooling to room temperature, the pH of the reaction solution was adjusted to a range of 7 to 8 using a 25% aqueous ammonia solution.

By the above-described method, a poly(acrylic acid-co-acrylamide-co-2-acrylamido-2-methylpropanesulfonic acid)lithium salt was prepared. Here, the molar ratio of a structural unit derived from acrylic acid, a structural unit derived from acrylamide, and a structural unit derived from 2-acrylamido-2-methylpropanesulfonic acid was 10:85:5. About 10 mL

of the reaction solution (reaction product) was taken and the content of a non-volatile component was measured, which was 9.5wt% (theoretical value: 10wt%).

**Preparation Example 2**

A binder was prepared in the same manner as in Preparation Example 1, except that the molar ratio of the structural unit derived from acrylamide and the structure unit derived from 2-acrylamido-2-methylpropanesulfonic acid was 85:15.

**Example 1**

Boehmite (particle diameter (D100): 0.5 μm, particle diameter (D50): 0.2 μm, plate-like filler), which is surface-modified with 3-aminopropyltriethoxysilane, was prepared by adding 3-aminopropyltriethoxysilane corresponding to 1.5 wt% of the solid content of boehmite (particle diameter (D100): 0.5 μm, particle diameter (D50): 0.2 μm, plate-like) to dry toluene, and refluxing the resulting product at 80 °C. The surface-modified boehmite has an amino group ($-NH_2$) on its outermost surface.

Cellulose nanocrystals having a carboxyl group were prepared through TEMPO catalytic oxidation treatment, which includes adding cellulose nanocrystals to water, adding TEMPO, adding an aqueous sodium hypochlorite (NaClO) solution to adjust the pH of the reaction solution to 10, and stirring the resulting solution for 2 hours.

A dispersion was prepared by mixing the acrylic binder prepared in Preparation Example 1 (10 wt% in distilled water), polyacrylic acid (PAA, weight average molecular weight: 300,000g/mol, glass transition temperature: 5 °C) (5 wt% in distilled water) as an adhesive binder, boehmite having an amino group, and cellulose nanocrystals having a carboxyl group, putting the resulting mixture into water as a solvent, and milling and dispersing the resulting solution using a bead mill at 25 °C for 30 minutes.

A composition for forming a coating layer was prepared by adding trimethylolpropane tris(2-methyl-1-aziridinepropionate) (trifunctional aziridine-based crosslinking agent) as an aziridine-based crosslinking agent to the dispersion, and adding water to have a total solid content of 20 wt%.

In the composition for forming a coating layer, 90 parts by weight of the acrylic binder : 10 parts by weight of the adhesive binder were included based on 100 parts by weight of the total of the acrylic binder and the adhesive binder.

In the composition for forming a coating layer, the total of the acrylic binder and the adhesive binder and the boehmite having an amino group may be included in a mass ratio of 1 : 20, the aziridine-based crosslinking agent is included at 10 parts by weight with respect to 100 parts by weight of the acrylic binder, and the cellulose nanocrystals having a carboxyl group are included at 2.5 parts by weight with respect to 100 parts by weight of the boehmite having an amino group.

A separator for a rechargeable lithium battery was prepared by coating both surfaces of a polyethylene-based film (thickness: 5.5 μm, CZMZ, air permeability: 90 sec/100cc, puncture strength: 370 kgf) as a porous substrate with the composition for forming a coating layer to a thickness of 0.9 μm by a die coating method, and drying and aging the resulting film in an oven at 80 °C for 16 hours.

**Examples 2 to 4**

Separators were prepared in the same manner as in Example 1, except that the composition of the composition for a coating layer in Example 1 was changed as shown in Table 1 below.

**Comparative Examples 1 to 5**

Separators were prepared in the same manner as in Example 1, except that the composition of the composition for a coating layer in Example 1 was changed as shown in Table 1 below.

The physical properties of the separators of Examples and Comparative Examples were evaluated as follows.

**Dry heat shrinkage rate (units:** %)

Samples were prepared by cutting the separators for a rechargeable lithium battery of Examples and Comparative Examples into a size of 10 cm × 10 cm. After leaving each sample in an oven at 150 °C for 1 hour, heat shrinkage rates in a mechanical direction (MD) and a transverse direction (TD) of each sample were calculated by measuring the dimensions of the sides of the rectangular sample. The heat shrinkage rates were calculated by Mathematical Formula 1 below.

Mathematical Formula 1:

$$\text{Heat shrinkage rate} = (L0 - L1)/L0 \times 100.$$

L0 is the initial length of the separator, and L1 is the length of the separator after leaving the separator at 150 °C for 1 hour.

**Heat shrinkage rate in electrolyte (units:** %)

Samples were prepared by cutting the separators for a rechargeable lithium battery of Examples and Comparative Examples into a size of 5 cm × 5 cm. A square with a size of 5 cm × 5 cm was drawn on the surface of each sample.

A positive electrode slurry was prepared by mixing 97 wt% of lithium-cobalt-nickel-aluminum (LiCoNiAl)-based oxide as a positive electrode active material, 1.5 wt% of carbon nanotubes as a conductive material, and 1.5 wt% of polyvinylidene fluoride, and adding N-methyl-2-pyrrolidone. A positive electrode was manufactured by coating an aluminum foil with the prepared positive electrode slurry, drying the slurry, and press-rolling the resulting product.

A negative electrode slurry was prepared by mixing 97.4 wt% of artificial graphite as a negative electrode active material, 1.0 wt% of carboxymethyl cellulose, 1.5 wt% of styrene-butadiene-based rubber, and 0.1 wt% of carbon nanotubes as a conductive material, and adding distilled water. A negative electrode was manufactured by coating a copper foil with the prepared negative electrode slurry, and drying, drying the slurry, and press-rolling the resulting product.

A sheet of the sample was placed between the positive electrode and the negative electrode to form three sets of positive electrode-sample-negative electrode laminates, and then the laminates were put into a pouch. 2 g of electrolyte (in which 1.5M $LiPF_6$ was dissolved in a mixture of ethylene carbonate, ethyl methyl carbonate, and dimethyl carbonate (volume ratio of 30:50:20)) was injected such that the laminates were fully impregnated with the electrolyte, sealed, and left at 25 °C for 12 hours. After leaving each sample in an oven at 150 °C for 1 hour, heat shrinkage rates in a mechanical direction (MD) and a transverse direction (TD) of each sample were calculated by taking the sample out from the oven and measuring the dimensions of the sides of the drawn square. The heat shrinkage rates were calculated by Mathematical Formula 1 above.

Table 1:

| | Binder | Modified boehmite or not | Cellulose nanocrystals | | Crosslinking agent | Dry heat shrinkage rate | | Heat shrinkage rate in electrolyte | |
|---|---|---|---|---|---|---|---|---|---|
| | | | Whether to modified or not | Content | Content | MD | TD | MD | TD |
| Example 1 | Preparation Example 1 | Modified | Modified | 2.5 | 10 | 3 | 2 | 4 | 3 |
| Example 2 | Preparation Example 1 | Modified | Modified | 5 | 10 | 2 | 1 | 3 | 2 |
| Example 3 | Preparation Example 1 | Modified | Modified | 10 | 10 | 2 | 1 | 2 | 2 |
| Example 4 | Preparation Example 2 | Modified | Modified | 5 | 10 | 2 | 1 | 3 | 2 |
| Comparative Example 1 | Preparation Example 1 | Not modified | - | 0 | 10 | 8 | 7 | 12 | 10 |
| Comparative Example 2 | Preparation Example 1 | Modified | - | 0 | 10 | 7 | 5 | 10 | 10 |
| Comparative Example 3 | Preparation Example 1 | Not modified | Modified | 10 | 10 | 5 | 3 | 6 | 5 |
| Comparative Example 4 | Preparation Example 1 | Modified | Not modified | 2.5 | 10 | 5 | 3 | 8 | 7 |

(continued)

| | Binder | Modified boehmite or not | Cellulose nanocrystals | | Crosslinking agent | Dry heat shrinkage rate | | Heat shrinkage rate in electrolyte | |
|---|---|---|---|---|---|---|---|---|---|
| | | | Whether to modified or not | Content | Content | MD | TD | MD | TD |
| Comparative Example 5 | Preparation Example 1 | Modified | Modified | 2.5 | 0 | 5 | 3 | 9 | 8 |

As shown in Table 1, the separators for a rechargeable lithium battery of Examples may exhibit a significantly low dry heat shrinkage rate and low heat shrinkage rate in an electrolyte, thereby increasing the safety and lifetime of a battery.

On the other hand, the separators of the Comparative Examples have significantly higher heat shrinkage rates in an electrolyte or higher dry heat shrinkage rates than the separators of the Examples.

Although the example embodiments of the present disclosure have been described above, the present disclosure is not limited thereto, and it is possible to implement various modifications within the scope of the claims, the detailed description of the present disclosure, and the accompanying drawings. These modifications also fall within the scope of the present disclosure.

**Claims**

**1.** A separator (30) for a lithium secondary battery (100), the separator (30) comprising:

a porous substrate (1); and
a coating layer (2) located on at least one surface of the porous substrate (1),
wherein the coating layer (2) comprises a composition including a binder (3; 4), a crosslinking agent, and a filler mixture, and
the filler mixture includes a filler having an amine group (6), and a filler having a carboxyl group (5) or carboxylate.

**2.** The separator (30) of claim 1, wherein the crosslinking agent comprises an aziridine-based crosslinking agent.

**3.** The separator (30) of claim 1 or 2, wherein the filler having an amine group (6) comprises a filler modified with an amino silane.

**4.** The separator (30) according to any one of claims 1 to 3, wherein the filler having an amine group (6) comprises a filler modified with an amino silane, wherein the amino silane comprises one or more of 3-aminopropyl triethoxysilane, 3-aminopropyl trimethoxysilane, 3-aminopropylmethyl dimethoxysilane, 3-aminopropylmethyl diethoxysilane, aminoethylaminopropyl trimethoxysilane, aminoethylaminopropyl triethoxysilane, aminoethylaminopropylmethyl dimethoxysilane, aminoethylaminopropylmethyl diethoxysilane, aminoethylaminomethyl triethoxysilane, aminoethylaminomethylmethyl diethoxysilane, diethylenetriaminopropyl trimethoxysilane, diethylenetriaminopropyltriethoxysilane, diethylenetriaminopropylmethyl dimethoxysilane, diethylenetriaminopropylmethyl diethoxysilane, and diethylenetriaminomethylmethyl diethoxysilane.

**5.** The separator (30) according to any one of claims 1 to 4, wherein the filler having an amine group (6) has a particle diameter (D100) of 1.0 μm or less.

**6.** The separator (30) according to any one of claims 1 to 5, wherein the filler having a carboxyl group (5) or carboxylate includes one or more of cellulose-based nanocrystals having a carboxyl group (5), and carboxylate and cellulose-based nanofibers having a carboxyl group (5) or carboxylate.

**7.** The separator (30) according to any one of claims 1 to 6, wherein the filler having a carboxyl group (5) or carboxylate has a maximum width in a range of ≥ 5 nm to ≤ 20 nm, and a maximum length in a range of ≥ 100 nm to ≤ 250 nm.

**8.** The separator (30) according to any one of claims 1 to 7, wherein the filler having a carboxyl group (5) or carboxylate

includes one or more of cellulose-based nanocrystals and wherein the cellulose-based nanocrystals having a carboxyl group (5) or carboxylate, and the cellulose-based nanofibers having a carboxyl group (5) or carboxylate, have a carboxyl group (5) or carboxylate linked to the C6 site of the cellulose unit.

**9.** The separator (30) according to any one of claims 1 to 8, wherein the filler having a carboxyl group (5) or carboxylate is included in a range of $\geq 2$ parts by weight to $\leq 15$ parts by weight with respect to 100 parts by weight of the filler having an amine group (6).

**10.** The separator (30) according to any one of claims 1 to 9, wherein the binder comprises a first binder and a second binder, and
the mass ratio of the total of the first binder and the second binder to the filler having an amine group (6) ranges from 1:10 to 1:50.

**11.** The separator (30) according to any one of claims 1 to 10, wherein the binder comprises a first binder and a second binder, and
the aziridine-based crosslinking agent is included in a range of $\geq 5$ parts by weight to $\leq 50$ parts by weight with respect to the 100 parts by weight of the first binder.

**12.** The separator (30) according to any one of claims 1 to 11, wherein the binder (3; 4) comprises a first binder (3) and a second binder (4), and

the first binder (3) comprises a (meth)acrylic binder, and
the (meth)acrylic binder comprises:

a first structural unit derived from (meth)acrylamide; and
a second structural unit which includes at least one of a structural unit derived from (meth)acrylic acid, (meth) acrylate, or a salt thereof, and a structural unit derived from (meth)acrylamidosulfonic acid or a salt thereof.

**13.** The separator (30) according to any one of claims 1 to 12, wherein the binder (3; 4) comprises a first binder (3) and a second binder (4), and

the first binder (3) comprises a (meth)acrylic binder, and
the second binder (4) comprises one or more of polyvinyl alcohol, polyacrylic acid, and poly(vinyl alcohol-co-acrylic acid).

**14.** The separator (30) according to any one of claims 1 to 13, wherein the coating layer (2) comprises a crosslinked product of the filler having an amine group (6) and the filler having a carboxyl group (5) or carboxylate.

**15.** A lithium secondary battery (100), comprising:

the separator (30) for a lithium secondary battery (100) according to any one of claims 1 to 14;
a positive electrode (10); and
a negative electrode (20).

FIG 1.

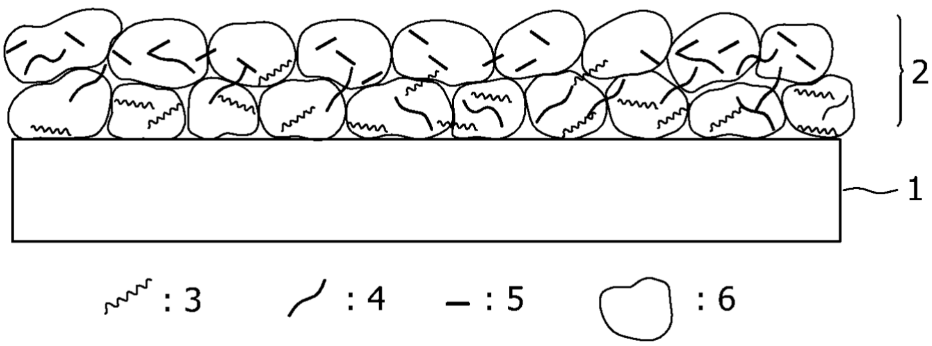

FIG 2.

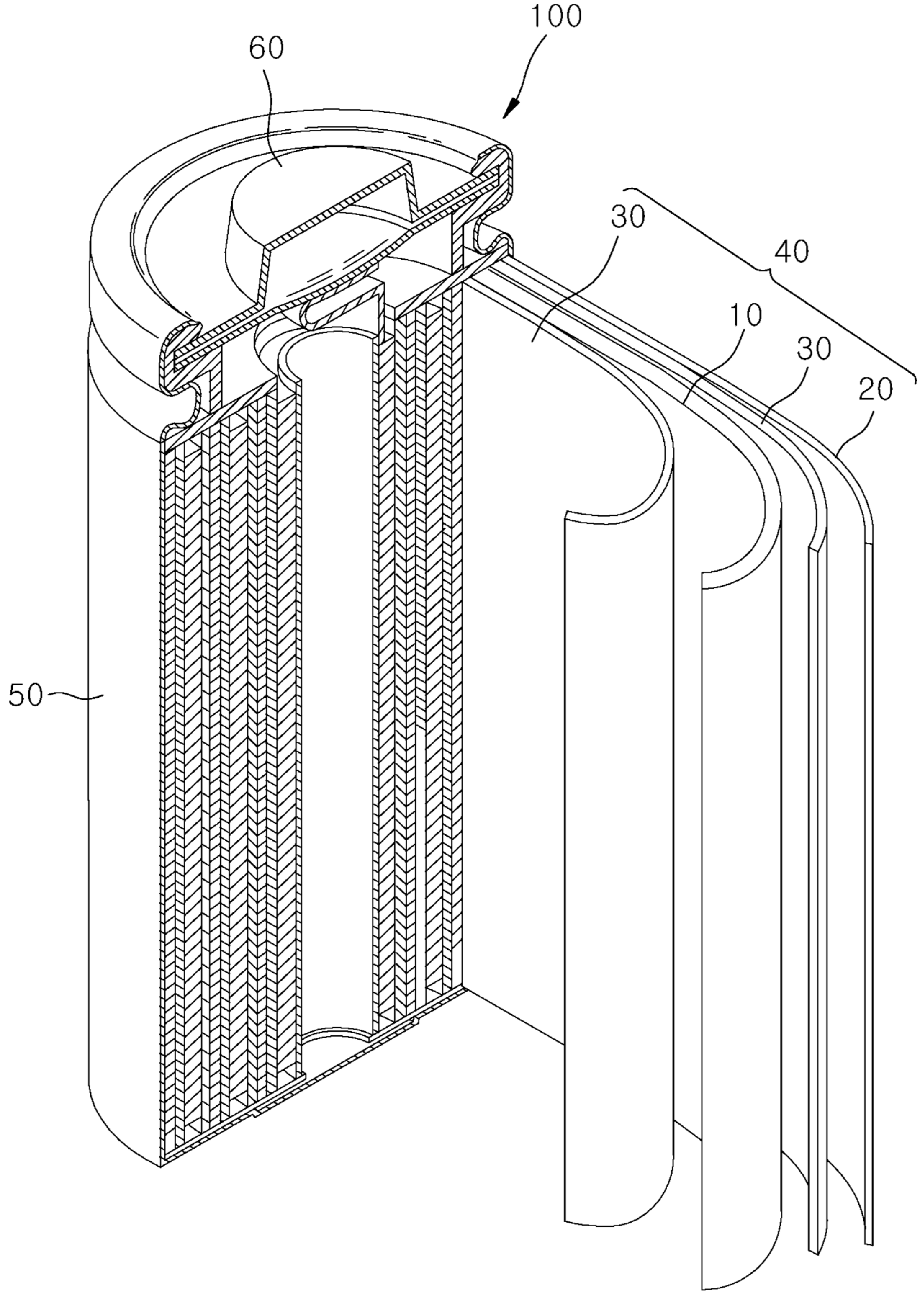

FIG 3.

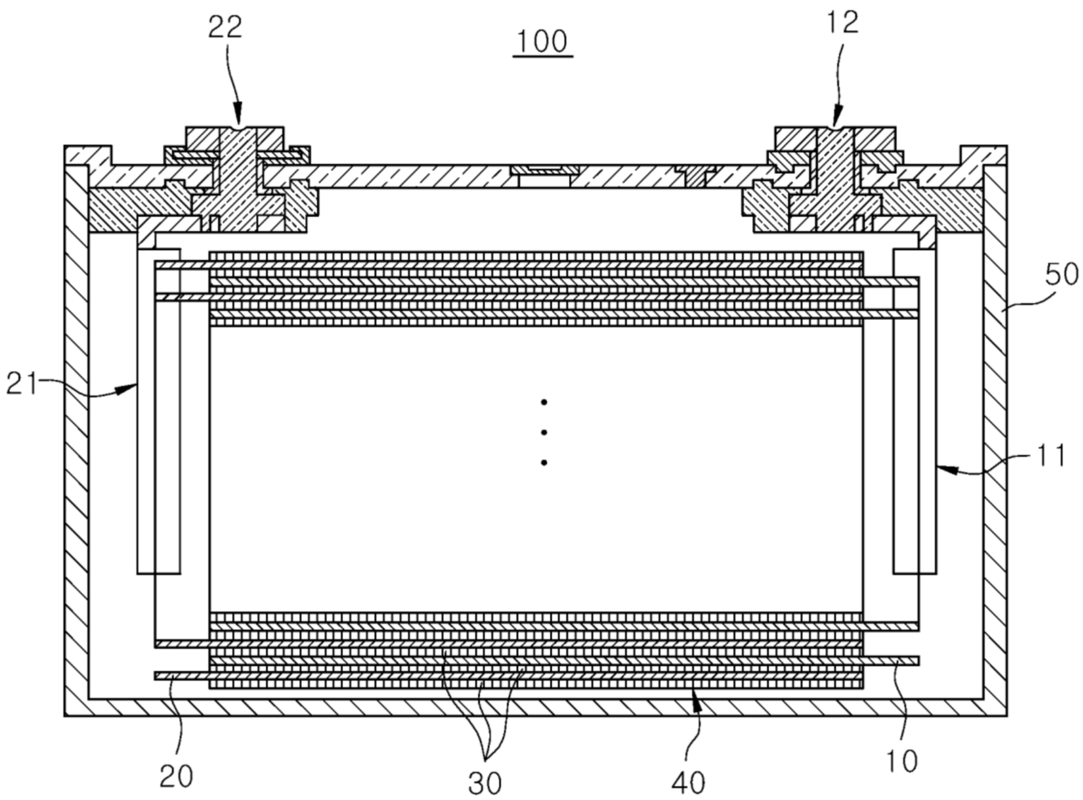

FIG 4.

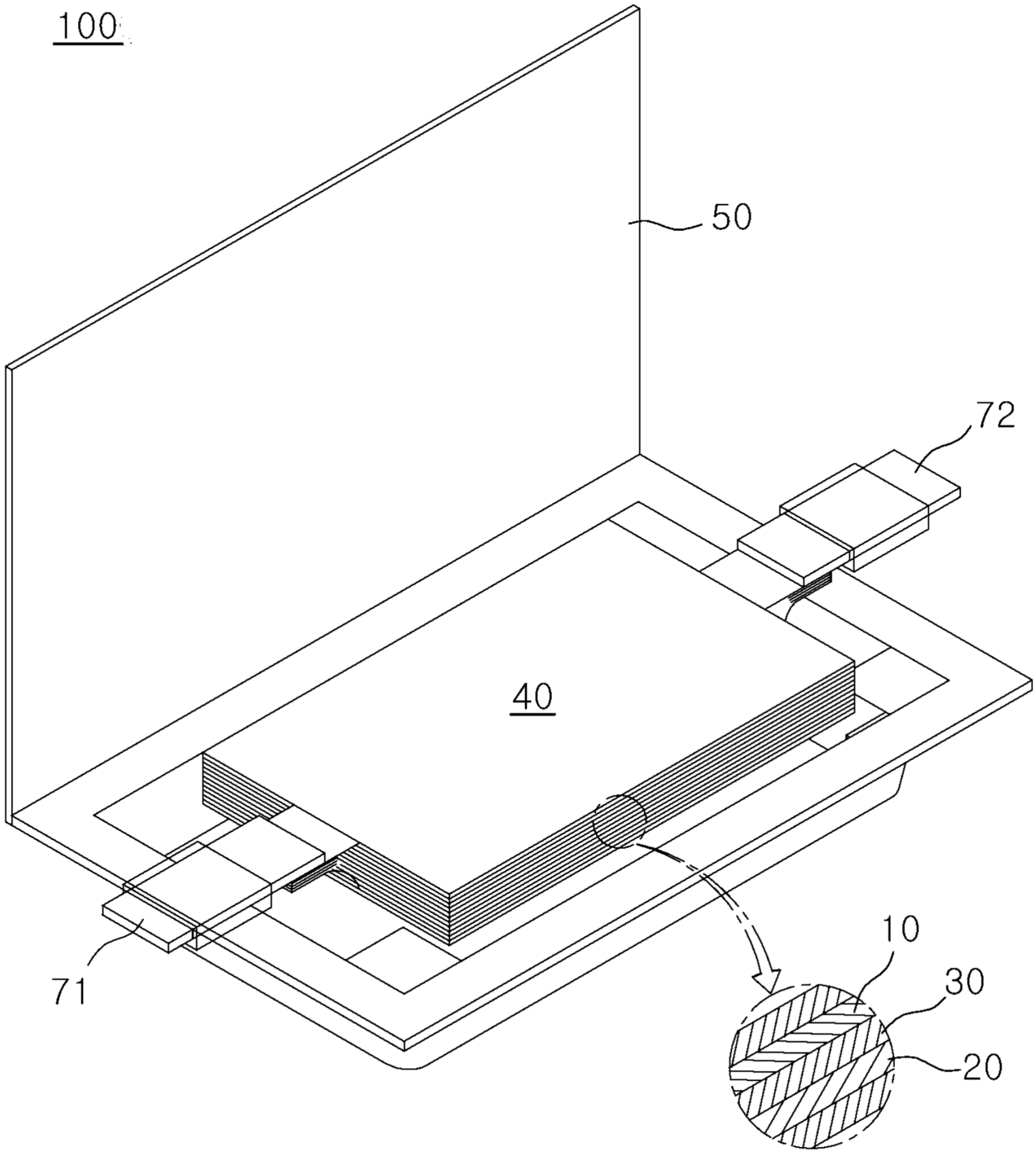

FIG 5.

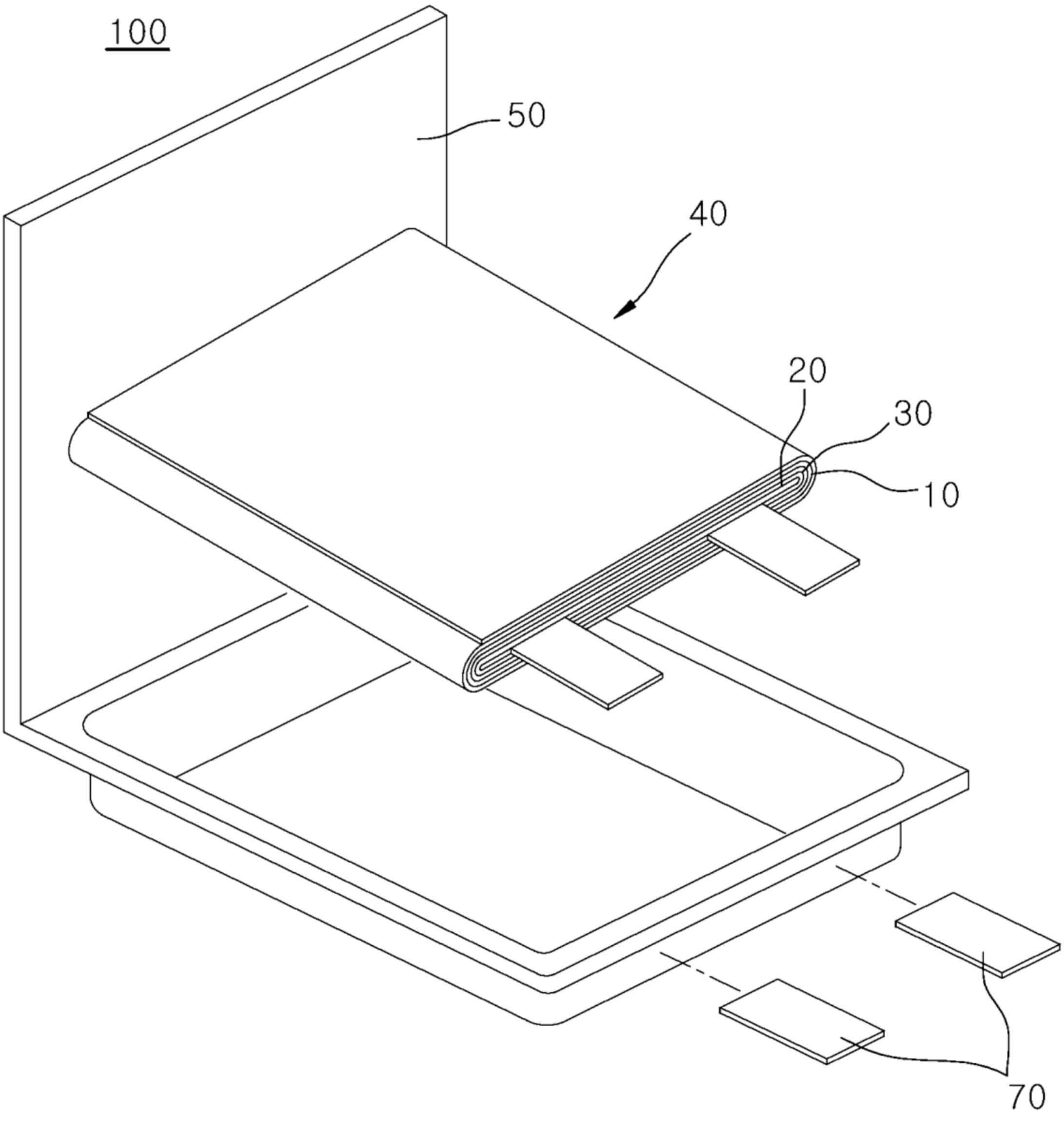

Europäisches Patentamt
European Patent Office
Office européen des brevets

# EUROPEAN SEARCH REPORT

Application Number
EP 25 22 7134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 645 499 A1 (SAMSUNG SDI CO LTD [KR]) 5 November 2025 (2025-11-05) * example 11 * ----- | 1-5,9-15 | INV. H01M10/052 H01M50/403 H01M50/429 H01M50/434 H01M50/443 H01M50/446 H01M50/451 |
| X | KR 2018 0075471 A (SAMSUNG SDI CO LTD [KR]) 4 July 2018 (2018-07-04) * example 1 * ----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 14 April 2026 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 22 7134

This annex lists the patent family members relating to the patent documents cited in the above-mentioned European search report. The members are as contained in the European Patent Office EDP file on
The European Patent Office is in no way liable for these particulars which are merely given for the purpose of information.

14-04-2026

| Patent document cited in search report | | Publication date | Patent family member(s) | | Publication date |
|---|---|---|---|---|---|
| EP 4645499 | A1 | 05-11-2025 | CN 120879130 | A | 31-10-2025 |
| | | | EP 4645499 | A1 | 05-11-2025 |
| | | | KR 20250158561 | A | 06-11-2025 |
| | | | US 2025337103 | A1 | 30-10-2025 |
| KR 20180075471 | A | 04-07-2018 | KR 20140112384 | A | 23-09-2014 |
| | | | KR 20180075471 | A | 04-07-2018 |

EPO FORM P0459

For more details about this annex : see Official Journal of the European Patent Office, No. 12/82